(19) Europäisches Patentamt

European Patent Office

Office européen des brevets

(11) **EP 1 035 506 A2**

(12) **EUROPEAN PATENT APPLICATION**

(43) Date of publication:
**13.09.2000 Bulletin 2000/37**

(51) Int. Cl.[7]: **G06N 3/04**

(21) Application number: **00104833.9**

(22) Date of filing: **07.03.2000**

(84) Designated Contracting States:
**AT BE CH CY DE DK ES FI FR GB GR IE IT LI LU MC NL PT SE**
Designated Extension States:
**AL LT LV MK RO SI**

(30) Priority: **08.03.1999 JP 6082199**

(71) Applicant: **Riken
Wako-shi, Saitama 351-0198 (JP)**

(72) Inventors:
• **Ichikawa, Michinori,
c/o Riken
Waki-shi, Saitama-ken (JP)**
• **Matsumoto, Gen,
c/o Riken
Waki-shi, Saitama-ken (JP)**

(74) Representative:
**Liesegang, Roland, Dr.-Ing.
FORRESTER & BOEHMERT
Franz-Joseph-Strasse 38
80801 München (DE)**

(54) **Brain type computer system**

(57)     There are provided a brain type computer system capable of realizing an advanced information processing similar to organic brains, and a storage system applicable thereto. A computer body 10 of the brain type computer system includes an analyzing part 1, arranged between an input information holding part 4 and an internal representation code holding part 5, for carrying out a bi-directional conversion (analysis/inverse mapping) between an input information and an internal representation code. The computer body 10 also includes an integrated storage part 2, arranged between the internal representation code holding part 5 and a high-order integrated code holding part 6, for establishing the relationship between a plurality of internal representation codes and for storing the relationship. The computer body 10 further includes a monitor and control part 3 for monitoring an input information, an internal representation code and a high-order integrated code, which are held by the input information holding part 4, the internal representation code holding part 5 and the high-order integrated code holding part 6, respectively, to control the analyzing part 1 and the integrated storage part 2.

FIG.1

## Description

### BACKGROUND OF THE INVENTION

#### Field of the Invention

The present invention relates generally to a computer system. More specifically, the invention relates to a brain type computer system capable of realizing an advanced information processing similar to organic brains, and a storage system applicable thereto.

#### Description of the Related Art

Conventionally, various attempts to realize an advanced information processing similar to brains by imitating organic brains have been made.

As one of such attempts, there is an attempt to apparently emulate the processes of brain's judgment, memory, behavior patterns and so forth by a rule (logical rule). Such an attempt is typically an artificial intelligence. The artificial intelligence has been already put to some practical uses (e.g., expert systems), and computer systems taking response and action similar to human's response and action at first glance have been developed.

On the other hand, there is also an attempt to imitate brains by simulating brain's action. Such an attempt is typically an attempt to imitate brain's recognitive and learning functions by simulating neuron's action by means of electronic circuits and software taking notice that brains are formed by an aggregate of neurons. In this attempt, a part of the functions have been already put to practical uses for speech recognition, image recognition and motion control, and computer systems, such as neutral net computers, have been developed.

However, the information processing realized by the above described conventional method is quite different from a very advanced information processing realized by brains. In particular, the greatest characteristics of brains, such as automatic acquisition of operation procedures, attainment of goals and planning therefor, can not be sufficiently solved even by any existing information processing techniques including stored program computer systems.

### SUMMARY OF THE INVENTION

In such a technical background, the present invention has been made on the basis of the results of the study of brains and engineering creativity. It is an object of the present invention to provide a brain type computer system capable of operating by a principle, which is quite different from those of conventional computer systems, and of realizing an advanced information processing similar to organic brains, and a storage system applicable thereto.

### Premises for the Present Invention

The starting point of the most basic idea for the present invention is based on brains. The inventors have studied the reduction of brains to a simple construction to the limit on the basis of various results of the study of brains in cerebrophysiology, psychology, anatomy and so forth. As a result, the inventors have found that apparently complicated brains are formed in accordance with a very simple rule in principle, and have made the present invention capable of realizing an engineering advanced information processing similar to brains with the simplest construction. In order to understand the present invention, parts of the results of the study of brains relating to the present invention will be briefly described below.

The brains of advanced mammals including humans mainly comprise four elements of the "brain stem," "limbic system," "cerebral neocortex" and "cerebellum". The functions of the elements are as follows:

(1) Brain Stem: control function required for survival (automatic nerve, reflex, rhythm generation, etc.);
(2) Limbic System: innate control function (affection, prototype of memory, etc.);
(3) Cerebral Neocortex: intelligent recognition function (memory, thinking, consciousness, etc.); and
(4) Cerebellum: accelerating function (smooth motion, patterned intelligent work, etc.).

The present invention has been made mainly taking notice of the construction and function of two elements of the "limbic system" and "cerebral neocortex" of the four elements. It is the most important role of the "limbic system" of these elements to judge the present status to select a course to make an individual, which is a host for the brains, favorable or comfortable to control the processing for the whole brains. On the other hand, it is the most important role of the "cerebral neocortex" to provide a method for specifically realizing the processing in accordance with the course selected by the "limbic system". The "cerebral neocortex" rearranges, classifies and identifies information acquired from an environment, to which the individual serving as the host for the brains is exposed, via sense organs (e.g., eyes, ears) to take action on the basis of the judgment in the "limbic system".

In primates including monkeys or higher, the "cerebral neocortex" consists of two regions of "sensory/motor system" and "association system." Of these regions, the "sensory/motor system" comprises a plurality of portions relating to senses, such as vision sense and audition, and motions, and dedicated neurons are assigned to the respective portions. On the other hand, it is known that in the "association system," the same neuron responds to various senses. In the results of many studies, it is suggested that the processing in the "sensory/motor system" is a portion for converting sense information to a kind of symbol, and that the processing in the "association system" is a portion for storing or consciously operating symbolized higher-order information.

However, such results of the study of brains are a set of local facts, and it is not clear how the brains operate as a whole. The inventors organically have combined such local facts to integrate the facts as the simplest construction by physical studies of the inevitability and homology of an information processing, and have made the present invention capable of realizing an engineering information processing similar to brains with the simplest construction.

Furthermore, in order to facilitate the understanding of the present invention, the brief corresponding relationship between the constructions of the present invention, which will be described later, and the brains is as follows:

(1) Analyzing Part: part of portions of the cerebral neocortex relating to senses and motions;
(2) Integrated storage Part: part of portions of the cerebral neocortex relating to memory and association; and
(3) Monitor and Control Part: part of portions of the brain stem and limbic system relating to emotion and evaluation.

However, these relationships are the brief corresponding relationships. For example, the input information, internal representation codes and high-order integrated codes according to the present invention are concepts introduced to identify the kind of data serving as an object to be processed in the analyzing part, the integrated storage part and the monitor and control part. The presence of some of intracerebral symbols corresponding thereto is confirmed, and the presence of other intracerebral symbols is not confirmed. In addition, a pre-processing part, a post-processing part and an input/output control part, which relate to input and output, are portions of the cerebral neocortex relating to senses and motions, and correspond to the greater part of portions, which are not contained in the analyzing part, and to a part of the cerebellum. Furthermore, an observing input/output part and an internal state input/output part are required to cause the present invention to be associated with existing external apparatuses (computers and various apparatuses) to operate, and do not correspond to the brains.

According to a first aspect of the present invention, a brain type computer system comprises: an input information holding part for holding an input information; an internal representation code holding part for holding an internal representation code indicative of semantics of the input information; a high-order integrated code holding part for holding a high-order integrated code indicative of the relationship between a plurality of internal representation codes. The brain type computer system also comprises an analyzing part for analyzing the input information held by the input information holding part to produce an internal representation code corresponding to the input information and for inversely mapping the internal representation code held by the internal representation code holding part to produce an input information corresponding to the internal representation code; an integrated storage part for establishing the relationship between a plurality of internal representation codes held by the internal representation code holding part to store the relationship therein, the integrated storage part producing a high-order integrated code corresponding to the relationship between a plurality of internal representation codes held by the internal representation code holding part, and the integrated storage part reproducing the high-order integrated code held by the high-order integrated code holding part to produce one or a plurality of internal representation codes corresponding to the high-order integrated code. The brain type computer system further comprises a monitor and control part for monitoring the input information, the internal representation code or the high-order integrated code, which are held by the input information holding part, the internal representation code holding part and the high-order integrated code holding part, respectively, to control the analyzing part and the integrated storage part.

According to the first aspect of the present invention, if an input information is inputted from the outside, internal representation codes corresponding to the input information are produced by the analysis in the analyzing part, and then, the relationship between the internal representation codes, together with high-order integrated code, are stored in the integrated storage part. Then, on the basis of the internal representation codes, the relationship between the internal representation codes, and the high-order integrated code, which are thus stored, internal representation codes corresponding to a desired high-order integrated code or the like are reproduced and inversely mapped by the integrated storage part and the analyzing part, respectively, to be reproduced as an input information. Therefore, the relationship between the internal representation codes (operation procedures or the like) can be automatically acquired on the basis of the input information from the outside. In addition, by carrying out a bi-directional reproduction using the integrated storage part, it is possible to reproduce a complete combination of internal representation codes from an incomplete combination of internal representation codes via a high-order integrated code, and it is possible to find the relationship between two internal representation codes (an internal representation code corresponding to the present position and an internal representation code corresponding to a target position). Therefore, it is possible to realize an advanced information processing, such as complement, analogy, prediction, planning, or attainment of a goal.

Furthermore, in the above described first aspect of the present invention, the analyzing part preferably produces a plurality of proposals for input information corresponding to the internal representation codes by inversely mapping the internal representation code held by the internal representation code holding part. Thus, by selecting an appropriate input information from the plurality of proposals for input information, which have been obtained by the inverse mapping, in a process for repeating the analysis/inverse mapping by the analyzing part, it is possible to complement an insufficient information to reproduce a correct input information even if the input information is insufficient. In addition, the analyzing part preferably learns the relationship between an input information and an internal representation code step by step. Thus, it is possible to autonomously adjust the analyzing form in the analyzing part on the basis of the correlation, similarity and frequency of the input information. Furthermore, although such learning is usually required when coping with a motor input information, it is not required for some kind of input information. Therefore, more preferably, the analyzing part has a learning mode, in which the relationship between an input information and an internal representation code is learned step by step, and a nonlearning mode, in which the relationship between the input information and the internal representation code is not learned, the learning and non-learning modes being switched in accordance with the kind of the input information.

In addition, in the above described first aspect of the present invention, the integrated storage part preferably stores therein the relationship between a plurality of internal representation codes held by the internal representation code holding part, with a temporal relationship. Thus, an input information containing a temporal element can be appropriately reproduced in view of the temporal relationship. In addition, the integrated storage part preferably stores therein the relationship between a plurality of internal representation codes held by the internal representation code holding part, together with the relationship between a plurality of high-order integrated codes held by the high-order integrated code holding part. Thus, it is possible to carry out a more complicated high-order integration to save the memory capacity required for storage. Moreover, the integrated storage part preferably reproduces an internal representation code corresponding to a high-order integrated code on the basis of the high-order integrated code held by the high-order integrated code holding part, and reproduces another internal representation code via a high-order integrated code corresponding to an internal representation code on the basis of the internal representation code held by the internal representation code holding part. Thus, it is possible to more easily realize the above described information processing, such as complement, analogy and prediction.

Moreover, in the above described first aspect of the present invention, the monitor and control part preferably controls the switching of the analysis/inverse mapping in the analyzing part, and the switching of the storage/reproduction in the integrated storage part. Thus, it is possible to operate the analyzing part and the integrated storage part in an appropriate form. In addition, the monitor and control part preferably evaluates an internal representation code held by the internal representation code holding part, and controls a storing operation or a reproducing operation in the integrated storage part on the basis of the evaluated result. Thus, it is possible to acquire a more preferable relationship between internal representation codes (operation procedures or the like). Moreover, the monitor and control part preferably compares an internal representation code, which is obtained by the analysis in the analyzing part, with an internal representation code obtained by the reproduction in the integrated storage part, and controls operations of the analyzing part and the integrated storage part. Thus, it is possible to confirm whether a correct operation is carried out. In addition, the monitor and control part preferably controls a selection operation for a plurality of input informations obtained by the inverse mapping in the analyzing part.

Furthermore, in the first aspect of the present invention, the brain type computer system preferably further comprises an observing input/output part for inputting/outputting an input information, an internal representation code or a high-order integrated code, which are held by the input information holding part, the internal representation code holding part and the high-order integrated code holding part, respectively, from/to an external apparatus. In addition, the brain type computer system preferably further comprises an input state input/output part for inputting/outputting data indicative of an internal stage in the integrated storage part or the monitor and control part from/to an external apparatus. Moreover, the brain type computer system preferably further comprise: a pre-processing part for converting a signal, which is obtained from an input unit, to input the converted signal as an input information; a postprocessing part for converting an input information, which is obtained by the inverse mapping in the analyzing part, to output a signal to an output unit; and an input/output control part for controlling the pre-processing part and the post-processing part under the control by the monitor and control part. Thus, it is possible to appropriately manage the brain type computer system from the external apparatus. In addition, it is possible to appropriately incorporate the outside information into the brain type computer system via the input unit, and it is possible to appropriate cause the output results of the brain type computer system to be reflected in the outside via the output unit.

According to a second aspect of the present invention, there is provided a storage system for inte-

grately managing sensory and motor input informations, comprising: an internal representation code holding part for holding a plurality of internal representation codes indicative of semantics of an input information; an integrated storage part for storing the relationship between the internal representation codes held by the internal representation code holding part; and a high-order integrated code holding part for holding a high-order integrated code indicative of the relationship between the internal representation codes held by the integrated storage part.

According to the second aspect of the present invention, the relationship between the internal representation codes held by the internal representation code holding part is stored in the integrated storage part, and the high-order integrated code corresponding to the relationship is stored in the high-order integrated code holding part. Therefore, on the basis of the internal representation codes, the relationship between the internal representation codes and the high-order integrated code, which have been thus stored, it is possible to reproduce an internal representation code corresponding to a desired high-order integrated code or the like, and it is possible to reproduce an internal representation code relating to a desired internal representation code via a high-order integrated code. Therefore, it is possible to appropriately and easily manage sensory and motor input informations having complicated relationships with respect to temporal elements, spatial elements, kind of information and so forth.

Furthermore, in the second aspect of the present invention, each of the internal representation codes held by the internal representation code holding part preferably has a time information indicative of a temporal relationship to other internal representation codes. In addition, the high-order integrated code held by the high-order integrated code holding part preferably has an evaluation information indicative of an evaluated result for the internal representation codes integrated under the high-order integrated code.

It should be noted that, throughout this specification, all information exchanged between the brain type computer system and the input or output unit will be hereinafter referred to as an "input information" since the conversion in the analyzing part is a bi-directional conversion so that it is difficult to distinguish an input from an output (information being an output at a certain time is an input when being incorporated again) and since the output to the output unit is not required for some applied tasks.

BRIEF DESCRIPTION OF THE DRAWINGS

The present invention will be understood more fully from the detailed description given herebelow and from the accompanying drawings of the preferred embodiments of the invention. However, the drawings are not intended to imply limitation of the invention to a specific embodiment, but are for explanation and understanding only.

In the drawings:

FIG. 1 is a block diagram of a preferred embodiment of a brain type computer system according to the present invention;
FIG. 2 is a schematic diagram showing an example for realizing an analyzing part (and an internal representation code holding part) of the brain type computer system shown in FIG. 1;
FIG. 3 is a schematic diagram for explaining a bidirectional neuron unit for use in the analyzing part and an integrated storage part shown in FIG. 2;
FIG. 4 is a schematic diagram showing a storage unit for use in the internal representation code holding part shown in FIG. 2;
FIGS. 5(a) through 5(f) are schematic diagrams for explaining a conversion processing (analysis/inverse mapping) carried out by the analyzing part of the brain type computer system shown in FIG. 1;
FIG. 6 is a schematic diagram showing an example for realizing an integrated storage part of the brain type computer system shown in FIG. 1;
FIG. 7 is a schematic diagram showing an example of a memory generating process in the brain type computer system shown in FIG. 1;
FIG. 8 is a schematic diagram showing another example of a memory generating process in the brain type computer system shown in FIG. 1;
FIG. 9 is a schematic diagram showing an example of a planning process in the brain type computer system shown in FIG. 1; and
FIG. 10 is a schematic diagram showing an example of a memory reconstructing process in the brain type computer system shown in FIG. 1.

DESCRIPTION OF THE PREFERRED EMBODIMENTS

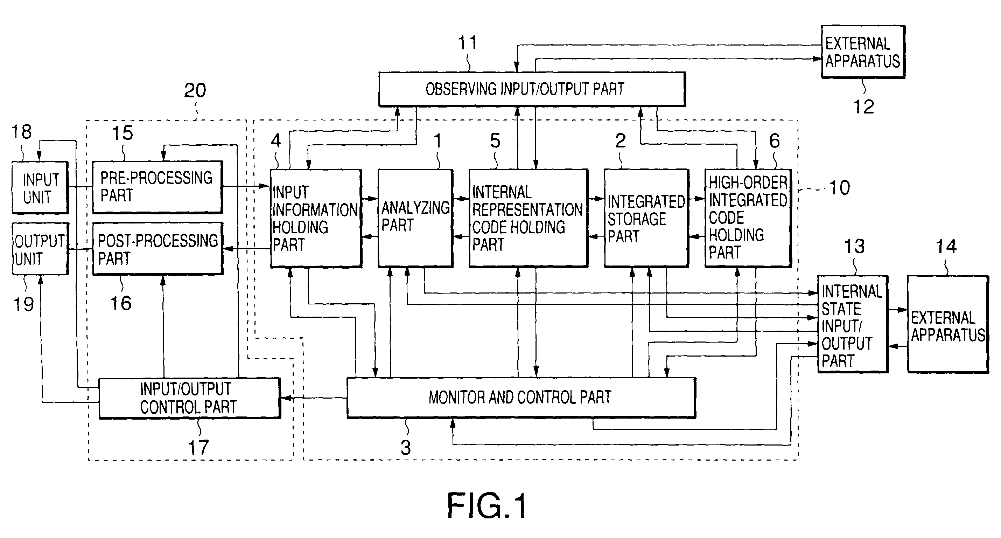

Referring now to the accompanying drawings, the preferred embodiment of the present invention will be described below. FIGS. 1 through 10 are diagrams for explaining a preferred embodiment of a brain type computer system according to the present invention.

Whole Construction

First, referring to FIG. 1, the whole construction of a brain type computer system will be described. As shown in FIG. 1, the brain type computer system has a computer body 10 for performing an advanced information processing similar to brains. The computer body 10 is connected to an input unit 18 and an output unit 19, which are external apparatuses, via an input/output interface part 20, so that an input information, such as data or a control signal, can be exchanged between the input unit 18 and the output unit 19.

For example, the input unit 18 includes sensors, an external computer and so forth. Physical measurements (images, voice, heat, acceleration, velocity, displacement, coordinates, vibration, electromagnetic waves, light, pressure, etc.) and chemical measurements (components and compositions of gas, liquid and solid, etc.), which are captured by the sensors, and information contents (data base information, internet information, book information, etc.) are inputted to the computer body 10 via the input/output interface part 20 as the input information. For example, the output unit 19 includes a servomotor, an actuator, an external computer or the like. The input information (physical measurements, chemical measurements, information contents, etc.) obtained by the information processing in the computer body 10 is outputted to the output unit 19 via the input/output interface part 20.

The computer body 10 includes an input information holding part 4 for holding an input information, an internal representation code holding part 5 for holding an internal representation code indicative of the abstract concept (semantics) of the input information, and a high-order integrated code holding part 6 for holding a high-order integrated code indicative of the relationship between a plurality of internal representation codes. Furthermore, the input information holding part 4, the internal representation code holding part 5 and the high-order integrated code holding part 6 can be realized as, e.g., electrical spaces utilizing semiconductor memories.

The computer body 10 further includes an analyzing part 1 which is provided between the input information holding part 4 and the internal representation code holding part 5 for performing a bi-directional conversion (analysis/inverse mapping) between the input information and the internal representation code. Also, the computer body 10 includes an integrated storage part 2 which is provided between the internal representation code holding part 5 and the high-order integrated code holding part 6 for establishing the relationship between the plurality of internal representation codes and for storing the relationship therein. In addition, the computer body 10 includes a monitor and control part 3 for monitoring the input information, the internal representation codes and the high-order integrated code, which are held by the input information holding part 4, the internal representation code holding part 5 and the high-order integrated code holding part 6, respectively, to control the analyzing part 1 and the integrated storage part 2. Furthermore, the detailed constructions and operations of the analyzing part 1, the integrated storage part 2 and the monitor and control part 3 will be described later.

Furthermore, in the computer body 10, the analyzing part 1, the integrated storage part 2, the monitor and control part 3, the input information holding part 4, the internal representation code holding part 5 and the high-order integrated code holding part 6 are connected to each other via communication lines as the relationship shown in FIG. 1, so that data can be exchanged and controlled between the respective parts.

In addition, the computer body 10 is connected to an observing input/output part 11 for observing the input information, the internal representation code and the high-order integrated code, which are held by the input information holding part 4, the internal representation code holding part 5 and the high-order integrated code holding part 6, respectively, from an external apparatus 12, such as a computer.

Moreover, the computer body 10 is connected to an internal state input/output part 13 for reading data indicative of the internal states of the analyzing part 1, the integrated storage part 2 and the monitor and control part 3 of the computer body 10, from the external apparatus 14 and for setting data from the external apparatus 14.

Furthermore, the input/output interface part 20 includes a pre-processing part 15 for converting a signal, which is obtained from the input unit 18, so as to adapt the signal to the logical and electrical construction of the input information holding part 4 and for inputting the converted signal as an input information. Also, the input/output interface part 20 includes a post-processing part 16 for converting the input information, which is obtained by the inverse mapping in the analyzing part 1, so as to adapt the input information to the output unit 19 and for outputting a signal to the output unit 19. In addition, the input/output interface part 20 includes an input/output control part 17 for controlling the pre-processing part 15 and the post-processing part 16 while being controlled by the monitor and control part 3.

The computer body 10, which is a main part of the above described brain type computer system, will be described in detail below. Furthermore, the constructions and operations of the analyzing part 1, the integrated storage part 2 and the monitor and control part 3 contained in the computer body 10 will be mainly described herein.

Analyzing Part 1

The analyzing part 1 performs a bi-directional conversion (analysis/inverse mapping) between an input information and an internal representation code. The analyzing part 1 analyzes the input information, which is held by the input information holding part 4, to generate an internal representation code corresponding to the input information, and inversely maps the internal representation code, which is held by the internal representation code holding part 5, to generate an input information corresponding to the internal representation code. Furthermore, the internal representation code and the input information, which are obtained by the analysis and inverse mapping in the analyzing part 1, are held by the internal representation code holding part 5 and the input information holding part 4, respectively.

The input information exchanged between the analyzing part 1 and the internal representation code holding part 5 or the input information holding part 4 includes both kinds of sensory information and motor information. Furthermore, the sensory input information is obtained by converting images, voice and other various physical measurements (heat, acceleration, displacement, vibration, etc.), various chemical measurements (components and compositions of gas, liquid and solid) and so forth, into quantities which are adapted to the input information holding part 4 of an image memory or the like. Specifically, for example, the visual input information includes image data obtained by performing the analog-to-digital conversion of a video signal, which is captured by the input unit 18, such as a video camera, via the pre-processing part 15 and by performing a basic processing, such as edge detection. On the other hand, the motor input information includes an instruction information corresponding to a control signal for the output unit 19, such as a servomotor or actuator. Specifically, for example, when a control signal of a certain time pattern is given from another apparatus to the output unit 19 to operate the output unit 19, the control signal causes actual motion by the output unit 19, such as a servomotor, and the control signal is converted via the pre-processing part 15 to be held by the input information holding part 4 as an input information. Furthermore, the signal corresponding to the motor input information can mechanically operate the servomotor or the like, and can produce sound via a voice synthesizing unit, an amplifier and a speaker.

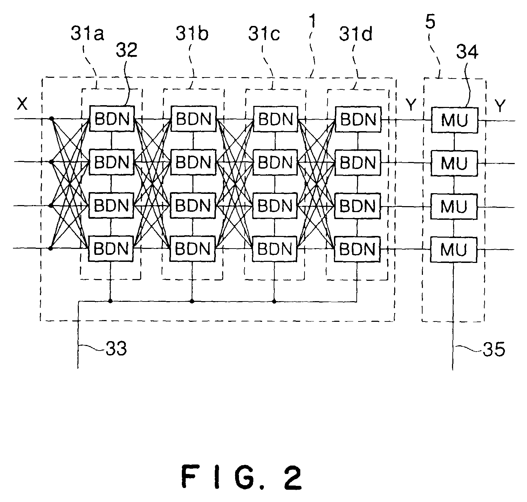

FIG. 2 shows an example for realizing the analyzing part 1 and the internal representation code holding part 5 which are shown in FIG. 1.

As shown in FIG. 2, the analyzing part 1 has a plurality of stages of analyzing layers 31a through 31d connected in series. Each of the analyzing layers 31a through 31d has a plurality of bi-directional neuron (BDN) units 32 connected in parallel. Furthermore, a mixing circuit (not shown) is provided at the input-side node of each of the bi-directional neuron units 32 for appropriately separating signals inputted from different signal sources. In addition, each of the bi-directional neuron units 32 is connected to a control line 33, which extends from the monitor and control part 3 and which allows signals relating to various parameters, such as a learning efficiency, a calculating direction and the setting of a threshold, to pass therethrough. Furthermore, although each of the analyzing layers 31a through 31d is preferably provided with about a thousand to about a million bi-directional neuron units 32, only four bi-directional neuron units 32 are herein shown in each of the stages in order to simplify explanation.

In addition, as shown in FIG. 2, the internal representation code holding part 5 has a plurality of storage units (memory units) 34. Each of the storage units 34 is connected to a corresponding one of the bi-directional neuron units 32 contained in the analyzing layer 31d in the final stage of the analyzing part 1. Furthermore, each of the storage units 34 is connected to a signal line 35 for exchanging the internal representation codes between the monitor and control part 3 and the storage units 34.

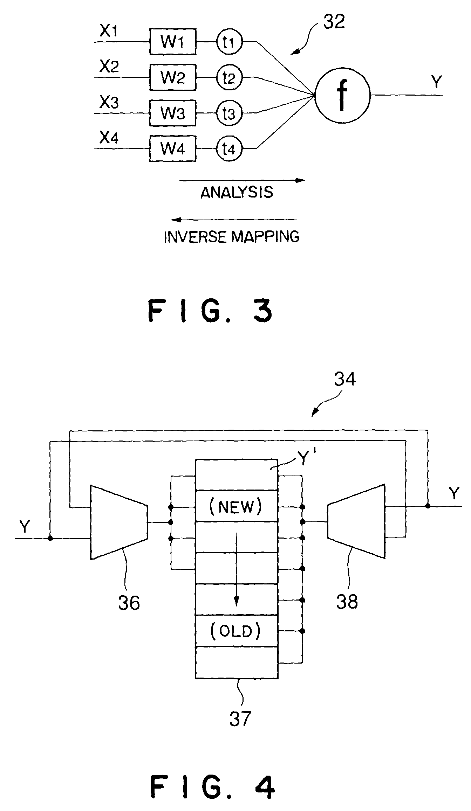

FIG. 3 shows the details of one of the bi-directional neuron units 32 for use in the analyzing part 1 shown in FIG. 2.

As shown in FIG. 3, the bi-directional neuron units 32 use a bi-directional neuron model newly introduced by the inventors. In a conventional neuron model, the inputs of synapses (connecting portions) are summed up, and when the sum exceeds a certain threshold, the output is transmitted to an axon (an output fiber), so that signals for use in calculation are not back-propagated in the synapses. As a neuron model which is relatively close to the bi-directional neuron model proposed herein, there is a neuron model for use in an error back-propagated type learning. In this neuron model, only signals for use in learning are back-propagated, and signals themselves for use in calculation are not back-propagated. It is considered that the reason for such a background is that such back-propagation does not exist in organic neurons. From the study in neuroscience, the inventors have found that many neurons are consequently bi-directionally connected by means of other fiber lines. Therefore, the bi-directional neuron model for carrying out the bi-directional propagation by one neuron model is never unnatural if it is introduced as an engineering model.

In the calculation in the forward direction (from left to right), the bi-directional neuron unit 32 shown in FIG. 3 conducts a calculation relating to a time direction by a delay time function $\underline{ti}$ after multiplying an input $\underline{Xi}$ by a connection intensity (an internal state) $\underline{Wi}$, and then, sums up the delay time function $\underline{ti}$ to output an output $\underline{Y}$ by a judgment function $\underline{f}$ (see formula (1)). On the other hand, in the calculation in the reverse direction (from right to left), the bi-directional neuron unit 32 returns $\underline{Xi}$ for $\underline{Y}$. At this time, since the relationship between the delay time function $\underline{ti}$ and the connection intensity $\underline{Wi}$ is reversed, conversion is carried out for the calculation so as to match with the reverse relationship (see formula (2)).

$$Y = f\left(\sum_{i=1}^{n} ti\,(XiWi)\right) \qquad (1)$$

$$Xi = \tilde{Wi}\,\tilde{ti}\,(Y)\ (i = 1{\sim}n) \qquad (2)$$

Furthermore, in the hi-directional neuron unit 32 shown in FIG. 3, the inverse functions of the delay

time function $t_i$ and connection intensity $W_i$ are preferably adjusted so that the inverse mapping is realized to have a certain spread (margin for selection) unlike a complete inverse mapping.

FIG. 4 shows the details of the storage unit 34 constituting the internal representation code holding part 5 shown in FIG. 2.

As shown in FIG. 4, each of the storage units 34 includes an encoder 36 for converting an internal representation $Y$ to an internal representation code $Y'$, a memory 37 for sequentially storing the internal representation code $Y'$ converted by the encoder 36, and a decoder 38 for converting the internal representation code $Y'$ stored in the memory 37 to the internal representation $Y$. The encoder 36 disconnects a plurality of internal representations $Y$ simultaneously presented to store a plurality of internal representation codes $Y'$ in the memory 37. On the other hand, the decoder 38 converts the internal representation codes $Y'$ stored in the memory 37 to reproduce internal representations $Y$. Furthermore, the memory 37 also holds the past contents of the internal representation codes $Y'$ so as to be capable of reproducing the past internal representation codes $Y'$ to the internal representations during decoding.

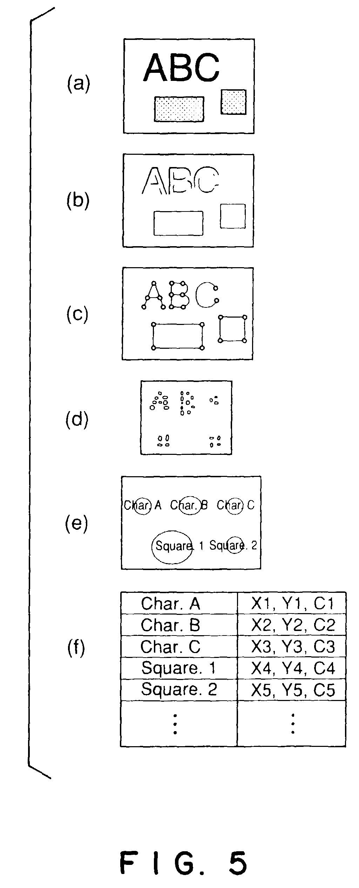

Referring to FIGS. 1 through 5, using the visual input information (e.g., characters and graphics) of the sensory input information as an example, the conversion processing (analysis/inverse mapping) in the analyzing part 1 will be described below. Furthermore, FIGS. 5(a) through 5(f) conceptually show an example of data obtained during the conversion (analysis) in the analyzing part 1.

In FIG. 1, after a video signal captured by a video camera (the input unit 18) is analog-to-digital converted to be stored in a frame memory (see FIG. 5(a)), a basic processing, such as edge detection, is carried out. Thereafter, the image data after such a basic processing are converted by the pre-processing part 15 of the input/output interface part 20 to be held by the input information holding part 4 as an input information (see FIG. 5(b).

Furthermore, the input information thus held by the input information holding part 4 is an object to be analyzed by the analyzing part 1. That is, in FIG. 2, when the input information is set on the $X$ side in the analyzing part 1 to set the calculating direction in each of the bi-directional neuron units 32 to be the forward direction via the control line 33 to start an analysis, a linear identification is carried out by the processing in each stage of the analyzing layers 31a through 31d. When the input information passes through all of the analyzing layers 31a through 31d in the four stages, a reference different from the linear similarity of the input information, i.e., an internal representation rearranged by semantic similarity, is outputted to the $Y$ side.

Specifically, the analyzing layer 31a in the first stage linearly separates basic graphic elements (e.g., lines, points of intersection, end points, contact points, angles, curves, etc.) from the input information (see FIG. 5(c)). Then, the analyzing layer 31b in the second stage classifies the basic graphic elements into simple graphic and character elements which can be formed by combining the basic graphic elements (see FIG. 5(d)). Then, the analyzing layer 31c in the third stage classifies the simple graphic and character elements into complex graphics and characters which can be formed by combining simple graphics and characters (see FIG. 5(e)). Then, the analyzing layer 31d in the final stage integrates the complex graphics in the semantics to output an internal representation to the $Y$ side of the analyzing part 1.

Furthermore, the internal representation thus outputted is inputted to each of the storage units 34 of the internal representation code holding parts 5. Then, in FIG. 4, the internal representation is converted to an internal representation code by the encoder 36 of each of the storage units 34 to be stored in the memory 37 (see FIG. 5(f)).

On the other hand, in FIG. 2, when the internal representation is set on the $Y$ side of the analyzing part 1 to set the calculating direction to be the reverse direction via the control line 33 to start an inverse mapping, an input information corresponding to the internal representation is outputted from the $X$ side by the processing in each stage of the analyzing layers 31d through 31a.

Specifically, the analyzing layer 31d in the final stage selects complex graphics and characters, which are shown in FIG. 5(e), as one of complex graphics and characters corresponding to the internal representation codes shown in FIG. 5(f). Then, the analyzing layer 31c in the third stage selects simple graphics and characters shown in FIG. 5(d), and the analyzing layer 31b in the second stage obtains graphics and characters of basic graphic elements shown in FIG. 5(c). Then, the analyzing layer 31a in the first stage reproduces an input information shown in FIG. 5(b) to output the input information to the $X$ side of the analyzing part 1.

While the example of the visual input information has been described above, the same conversion processing (analysis/inverse mapping) may be carried out even in the case of an input information other than the visual input information and in the case of a motor input information. That is, when a motor input information is set on the $X$ side of the analyzing part 1 to start an analysis, operation patterns are separated from the input information by the processing in each stage of the analyzing layers 31a through 31d, and some of the operation patterns appearing in a certain order are integrated into one to be outputted as an internal representation. Specifically, for example, some basic patterns are given as an input information from another apparatus to be automatically classified on the basis of similarity by the processing in each of the analyzing layers 31a through 31d. Then, in a process passing through the multistage analyzing layers 31a through 31d, a plurality of basic patterns are combined to be classified into a more complexly combined operation to output an internal representation indicative of a complex operation (e.g., a steering is turned to the right during the driving of a car). On the other hand, when an internal representation is set on the Y side of the analyzing part 1 to start an inverse mapping, an input information reproducing the same or similar operation is outputted from the X side by the processing in each stage of the analyzing layers 31d through 31a.

Furthermore, in the above described conversion processing (analysis/inverse mapping), the inverse conversion of the sensory internal representation code in the analyzing part 1 corresponds to the reproduction of a sense, and the inverse conversion of the motor internal representation code in the analyzing part 1 corresponds to the reproduction of a motion. In general, in the conventional concept of the information processing, the contents of the processing of a sensory information are quite different from the contents of the processing of a motor information. However, if the above described methods, i.e., the multistage linear separation (analysis) and reproduction (inverse mapping), are used, the processing of the sensory information and the processing of the motor information can be realized by the same construction.

However, the sensory input information is characterized in that its information contents are multidimensional and very large, and the motor input information is characterized in that its information contents must be numerically precise although the information contents have a low dimension. In view of such characteristics, different constructions may be suitably used every kind of input information serving as an object to be processed. In addition, since there are some cases where the same kind of input information (e.g., visual input information) has different characteristics (e.g., whether there is a motion in an object to be recognized), different constructions may be suitably used in view of such characteristics.

Furthermore, the analyzing part 1 preferably includes a plurality of independent units so as to be capable of carrying out the conversion processing of a plurality of kinds of input informations in parallel. Thus, it is possible to simultaneously handle the visual input information and the motor input information. For example, it is possible to appropriately cope with an applied task, such as the monitoring of the operation of a finger of a robot using a video camera.

In addition, the analyzing part 1 preferably utilizes the spread of the inverse mapping in the bi-directional neuron unit 32 to produce a plurality of proposals for input information corresponding to an internal representation code by inverse mapping the internal representation code. Thus, by selecting an appropriate input information from the plurality of proposals for input information, which are obtained by the inverse mapping, in a process for repeating the analysis/inverse mapping by the analyzing part 1, it is possible to complement an insufficient information to reproduce an accurate input information even if the input information is incomplete. Furthermore, such selection is carried out under the control using the monitor and control part 3.

Moreover, the analyzing part 1 preferably learns the relationship between the input information and the internal representation code step by step. Furthermore, although such learning is usually required when a motor input information is handled, some of kinds of input informations are not required to be learned. Therefore, more preferably, a learning mode and a non-learning mode may be prepared so that the two modes can be switched in accordance with the kind of the input information. Furthermore, such mode switching is carried out under the control using the monitor and control part 3.

Integrated storage Part 2

The integrated storage part 2 is designed to establish the relationship between a plurality of internal representation codes held by the internal representation code holding part 5 and to store the relationship therein. The integrated storage part 2 produces a high-order integrated code corresponding to the relationship between a plurality of internal representation codes stored in the internal representation code holding part 5, and reproduces a high-order integrated code held by the high-order integrated code holding part 6 to produce one or a plurality of internal representation codes corresponding to the high-order integrated code. Furthermore, the high-order integrated code and the internal representation code, which are obtained by the storage/reproduction in the integrated storage part 2, are held by the high-order integrated code holding part 6 and the internal representation code holding part 5, respectively.

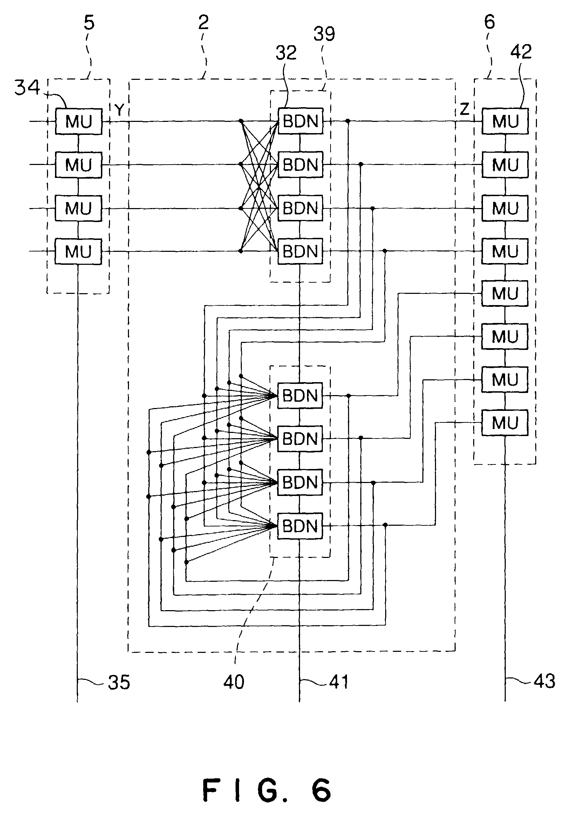

The internal representation code holding part 5, the integrated storage part 2 and the high-order code holding part 6 constitute, as a whole, a storage system for integratedly managing sensory and motor input informations. FIG. 6 shows an example for realizing such a storage system (the internal representation code holding part 5, the integrated storage part 2 and the high-order integrated code holding part 6).

As shown in FIG. 6, the integrated storage part 2 has a first storage layer 39 and a second storage layer 40. Each of the storage layers 39 and 40 has a plurality of bi-directional neuron units 32 connected in parallel. The output terminal of each of the bi-directional neuron units 32 of the first storage layer 39 is connected to the input terminal of a corresponding one of the bi-directional neuron units 32 of the second storage layer 40. The output terminal of each of the bi-directional neuron units 32 of the second storage layer 40 is connected to the input terminal of another bi-directional neuron unit 32. Furthermore, the bi-directional neuron units 32 used herein are the same as those used in the analyzing part 1 (see FIG. 3). In addition, each of the bi-directional neuron units 32 is connected to a control line 41 extending from the monitor and control part 3 for allowing signals relating to the calculating direction and so forth to pass therethrough.

In addition, as shown in FIG. 6, the high-order integrated code holding part 6 has a plurality of storage units (memory units) 42. Each of the storage units 42 is realized by a construction similar to the storage unit 34 shown in FIG. 4, and is designed to store the high-order integrated result, which is outputted from each of the bi-directional neuron units 32, as a high-order integrated code. The assignment of the high-order integrated code (name) corresponding to such high-order integration is carried out under the control using the monitor and control part 3. Furthermore, each of the storage units 42 is connected to a signal line 43 for exchanging the high-order integrated code between the monitor and control part 3 and the storage units 42.

The internal representation code held by the internal representation code holding part 5 is an object to be integrated (stored) in the integrated storage part 2. That is, in FIG. 6, when the internal representation is set on the Y side of the integrated storage part 2 to instruct integration (storage) via the control line 41, the connection intensity Wi (see FIG. 3) of each of the bi-directional neuron units 32 is rewritten to establish the relationship between the internal representation and other internal representations, which are simultaneously presented, to store the relationship. Simultaneously, when one of the bi-directional neuron units 32 is selected via the control line 41, the high-order integrated result corresponding to the relationship between the internal representation codes is outputted to the Z side.

On the other hand, in FIG. 6, when the high-order integrated result is set on the Z side of the integrated storage part 2 to instruct reproduction via the control line 41, the calculation in the reverse direction is started to output an internal representation corresponding to the high-order integrated result from the Y side.

Furthermore, the integrated storage part 2 is capable of reproducing an internal representation code corresponding to a high-order integrated code on the basis of the high-order integrated code, which is held by the high-order integrated code holding part 6, under the control using the monitor and control part 3, and of reproducing an internal representation code via a high-order integrated code corresponding to another internal representation code on the basis of the other internal representation code held by the internal representation code holding part 5. For example, the former reproduction corresponds to a case where characters constituting each word are reproduced from the name of one word (the high-order integrated code). On the other hand, for example, the latter reproduction corresponds to a reproduction when there is an error or an omission of a character in a part of characters constituting a word. Specifically, after only an already understood character is presented as an internal representation code to produce a high-order integrated code corresponding thereto, all of characters relating to the high-order integrated code are reproduced to complement the error, the omission of the character or the like.

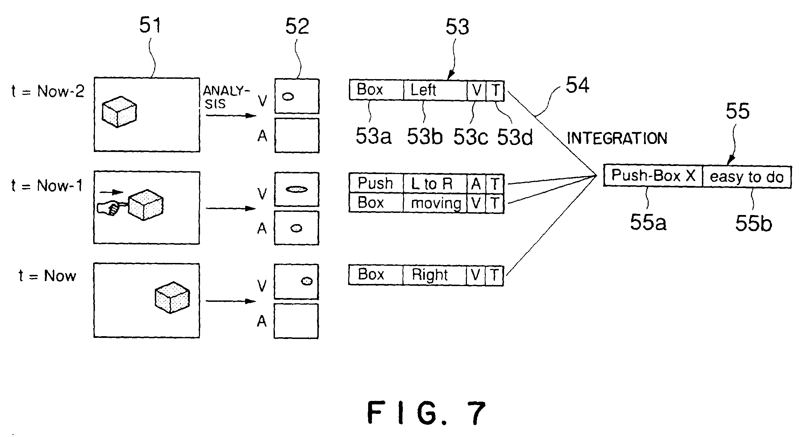

Furthermore, the relationships between internal representation codes can be various relationships by temporal elements, spatial elements, kinds of information (sensory, motor). For example, even when a word of a plurality of characters is recognized, there are cases where the plurality of characters are simultaneously recognized as a combination by a video camera or the like and where the plurality of characters are sequentially read to be recognized by a speech recognizing unit or the like. In the former case, a plurality of internal representation codes outputted from the analyzing part 1 exist simultaneously, and in the latter case, a plurality of internal representation codes are sequentially presented at certain time intervals. Therefore, the integrated storage part 2 is preferably capable of storing the relationship between a plurality of internal representation codes, which are stored in the internal representation code holding part 5, with the temporal relationship and of reproducing the plurality of internal representation codes in view of the temporal relationship. Furthermore, the internal representation code holding part 5 is capable of storing the internal representation code with time information (see a time stamp 53d shown in FIG. 7).

In addition, the relationships between internal representation codes are very various, and the number thereof is very large. Therefore, the integrated storage part 2 preferably stores the relationships (the higher-order integrated results obtained by integrating the high-order integrated results) between a plurality of high-order integrated codes stored in the high-order integrated code holding part 6, in addition to the relationships between a plurality of internal representation codes stored in the internal representation code holding part 5. For example, with respect to a long word formed by combining short words, the integrated storage part 2 is preferably capable of storing the combination of the internal representation codes as the relationship, along with the combination of the high-order integrated codes corresponding to the short words as the relationship. Thus, it is possible to carry out a more complex high-order integration, so that it is possible to save the memory capacity required for storage. Furthermore, in FIG. 6, the output of each of the bi-directional neuron units 32 of the first storage layer 39 of the integrated storage part 2 is connected to a corresponding one of the bi-directional neuron units 32 of the second storage layer 40, so that each of the bi-directional neuron units 32 of the second storage layer 40 can store the relationships between a plurality of high-order integrated codes.

In addition, some of the relationships between internal representation codes are good relationships satisfying a predetermined evaluation criteria, and other relationships are not so. Therefore, with respect to only good relationships, the storing operation and the operation for producing the high-order integrated codes are preferably positively carried out. In addition, when there are a plurality of similar relationships, the reproduction of good relationships is preferably promoted, and the reproduction of no-good relationships is preferably inhibited. The high-order integrated code holding part 6 is capable of storing with an evaluation information indicative of the evaluated results corresponding to each of internal representation codes integrated under the high-order integrated code (see an evaluation information 55b shown in FIG. 7). In addition, when there are a plurality of evaluated results, the evaluation results are integrated to be applied as an evaluation information. Furthermore, the judgment of the quality of the relationships between the internal representation codes, the storing/reproducing operation, and the operation for producing the high-order integrated code are carried out under the control using the monitor and control part 3.

Monitor and Control Part 3

The monitor and control part 3 monitors the input information, the internal representation code and the high-order integrated code, which are held by the input information holding part 4, the internal representation code holding part 5 and the high-order integrated code holding part 6, respectively, to control the analyzing part 1 and the integrated storage part 2. The monitor and control part 3 controls the analyzing part 1 and the integrated storage part 2 so as to reach a predetermined goal in accordance with an operation function and a performance function which are prepared every applied task.

The operation function is a function describing basic operations, such as an initial operation and a fixed pattern. Specifically, for example, if the applied task is "automatic pilot of an airplane," there are prepared, as operation functions, a function describing a basic operation for a flight of an airplane, a function for preventing the piloting from being beyond the limits of the strength and thrust of the airframe of the airplane, a function describing essential items when the system is abnormal, and so forth. On the other hand, if the applied task is "a security system," there is prepared a function describing a basic operation for detecting a suspicious person, fire and so forth.

On the other hand, the performance function is a function for evaluating the performance. The performance function evaluates on the basis of the input information, the internal representation code and the high-order integrated code which are held by the input information holding part 4, the internal representation code holding part 5 and the high-order integrated code holding part 6, respectively. Specifically, for example, if the applied task is the "automatic pilot of an airplane," a safe flight, a comfortable flight, an economic flight and so forth are evaluated in accordance with the performance function to prepare a function for inducing storage/reproduction in the integrated storage part 2 in the direction, and so forth. On the other hand, the applied task is a "security system," there are prepared a function for aiming to more precisely judge a person's face, a function for aiming to take notice of a status different from a usual status, and so forth.

Furthermore, the above described operation and performance functions may be continuous or discrete functions. In addition, the above described operation and performance functions include a function describing a separate case and a separate response in that case, an operation for simultaneously received inputs, and an operation for sequentially received inputs. Moreover, the above described operation and performance functions may store the internal states in a memory or the like. In addition, a plurality of functions may be prepared as the above described operation and performance functions, and some of the plurality of functions may be selected by user's or engineer's designation or automatically selected. Furthermore, the operation function is designed to always give some answer which is not indefinite, and the performance function is designed to notify impossible when evaluation is impossible.

In the monitor and control part 3, the following various controls are carried out on the basis of the above described operation and performance functions. Furthermore, the monitor and control part 3 may be realized by, e.g., a neutral net using a digital signal processor (DSP).

(1) The switching of analysis/inverse mapping in the analyzing part 1, and the switching of storage/reproduction in the integrated storage part 2 are controlled.

(2) The internal representation codes held by the internal representation code holding part 5 are evaluated, and the storing/reproducing operation in the integrated storage part 2 and the operation for producing the high-order integrated codes are controlled on the basis of the evaluated results. Furthermore, when the evaluated results for a plurality of performance functions are in opposition to each other so that evaluation can not be carried out even by the decision by a majority, a processing is carried out in accordance with a preset procedure. The preset procedure is a separate response according to the case. Furthermore, when evaluation can not be carried out even by such a procedure, evaluation is carried out by random numbers or the like.

(3) Appropriate high-order integrated codes (names) are assigned to the high-order integrated results in the integrated storage part 2 on the basis of the internal representation codes, the evaluated results and so forth.

(4) The internal representation code obtained by the analysis in the analyzing part 1, and the internal representation code obtained by the reproduction in the integrated storage part 2 are checked to control the operations of the analyzing part 1 and integrated storage part 2 on the basis of the checked results. Furthermore, when both are not the same, the integrated storage part 2 is temporarily stopped to request the analyzing part 1 to analyze again. At this time, in accordance with the status, it is selected whether the temporary stopping is maintained for a long time or failure is acknowledge to stop the processing. This judgment is preferably embedded as one of the performance functions.

(5) The selecting operation for a plurality of proposals for input information obtained by the inverse mapping in the analyzing part 1 is controlled.

(6) The operations, such as the adjustment of the information holding time in at least one of the input information holding part 4, the internal representation code holding part 5 and the high-order integrated code holding part 6, and the erasing thereof, are controlled.

(7) The switching of the learning efficiency and mode (learning mode/non-learning mode) in the analyzing part 1 is controlled.

(8) The adjusting operation between two reproducing methods (reproduction from the high-order integrated codes/reproduction from the internal representation codes) in the integrated storage part 2 is controlled.

Furthermore, the monitor and control part 3 is capable of inputting an input information, an internal representation code and a high-order integrated codes to the input information holding part 4, the internal representation code holding part 5 and the high-order integrated code holding part 6, respectively, and of directly inputting the operated results of the operation functions to the input information holding part 4, the internal representation code holding part 5 and the high-order integrated code holding part 6 in the initial state, an unknown status or an emergency situation.

In addition, although the type of the monitor and control part 3 is usually a non-leaning type, it can be switched to a learning type. In this case, the monitor and control part 3 is required to prevent the control against user's or engineer's will. Because the learning in the monitor and control part 3 is in very danger in view of the system management. Therefore, when the type of the monitor and control part 3 is switched to the learning type, a non-learning type monitor and control part is preferably prepared in parallel to switch the learning type monitor and control part to the non-learning type monitor and control part in accordance with the status.

Moreover, since the control method in the monitor and control part 3 is different every applied task, the user or engineer can preferably add or change the function and so forth in accordance with the intended purpose.

Whole Operation

The whole operation of the brain type computer system with this construction will be described below. As an example, an applied task for arranging a box (object) in a projection range of a video camera (input unit 18), giving a signal to a servomotor (output unit 19) while the box always takes pictures by the video camera, and driving the finger of a robot to move the box, will be described below.

Operation Example 1

First, supposing a case where a control signal is given to the servomotor from an external unit, which is different from the brain type computer system, to drive the finger of the robot to move the box.

In this case, video signals captured by the video camera and control signals given to the servomotor are sequentially inputted to the computer body 10 with the elapsed time to be held by the input information holding part 4 as visual and motor input informations.

As this time, in the computer body 10, the calculating directions in the analyzing part 1 and integrated storage part 2 are switched to the forward directions (analysis and storage) under the control by the monitor control part 3. First, the input information held by the input information holding part 4 is analyzed by the analyzing part 1 to be held by the internal representation code holding part 5 as an internal representation code. Then, the relationship between one of a plurality of internal representation codes held by the internal representation code holding part 5 is established by the integrated storage part 2 to be stored therein. Furthermore, an appropriate name is assigned to such relationship under the control by the monitor and control part 3 to be held by the high-order integrated code holding part 6 as a high-order integrated code.

FIG. 7 schematically shows the processed contents of the computer body 10 when the box is moved from the left to the right. There are shown three typical states, an initiation state (t = Now - 2) wherein the box is arranged on the left side in the projection range, an intermediate state (t = Now - 1) wherein the box is moving, and an end state (t = Now) wherein the box is arranged on the right side in the projection range. Furthermore, in FIG. 7, input informations 51, internal representations 52, internal representation codes 53 and a high-order integrated code 55 are conceptually shown. Actual data are internal codes of a plurality of bits expressing physical quantities, and can not be directly read by human's observation.

In FIG. 7, if the uppermost initiation state (t = Now - 2) is taken as an example, the input information 51 (only visual input information in this case) held by the input information holding part 4 is first analyzed by the analyzing part 1, and a visual internal representation ("V") and a motor internal representation ("A") (an empty internal code in this case) are outputted as the internal representation 52. The internal representation 52 is finally coded to be held by the internal representation code holding part 5 as the internal representation code 53. Furthermore, the internal representation code 53 is data for reproducing the internal representation 52, and has an index information 53a ("Box"), an attribute information 53b ("Left"), a signal source information 53c ("V" (visual) / "A" (motor)), and a time stamp 53d ("T") indicative of a relative time information.

Similarly, the input information 51 in the intermediate state (t = Now - 1) and the end state (t = Now) is analyzed by the analyzing part 1 to produce a plurality of internal representation codes 53 shown in FIG. 7.

Thereafter, the relationship between the plurality of internal representation codes 53 held by the internal representation code holding part 5 is established, and the relationship (link 54) is stored. Furthermore, an appropriate name is assigned to such relationship under the control by the monitor and control part 3 (one name of the internal representation codes 53 is herein utilized as "Push-Box X") to be held by the high-order integrated code holding part 6 as the high-order integrated code 55. The high-order integrated code 55 has an evaluation information 55b in addition to an index information 55a ("Push-Box X"). The evaluation information 55b is an evaluated result for each of the internal representation codes 53 integrated under the high-order integrated code 55, and is given by the monitor and control part 3. Although an evaluation information "simple ("easy to do")" is herein given taking notice of ease of the operation when the box is moved, various evaluation information, such as "difficult," "good," "bad," "large," "small," "heavy," "light" and so forth may be given as other evaluation information.

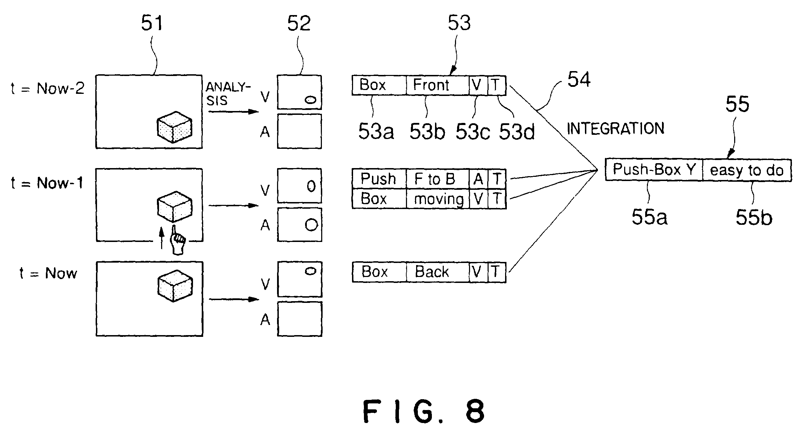

FIG. 8 schematically shows the processed contents in the computer body 10 when the box is moved from the near side to the far side. Similar to the case shown in FIG. 7, the production of the internal representation codes 53, the establishment of the relationship between the internal representation codes 53, the storing of the relationship (link 54) between the internal representation codes 53, and the production of the high-order integrated codes 55 are carried out.

Furthermore, the internal representation codes 53, the relationship (link 54) between the internal representation codes 53, and the high-order integrated codes 55, which are thus held by the internal representation code holding part 5, the integrated storage part 2 and the high-order integrated code holding part 6, respectively, include the operation procedures for moving the box. Therefore, if a plurality of such operation procedures are stored, these relationships can be utilized to directly give control signals to the servomotor from the computer body 10 to drive the finger of the robot to move the box.

For example, such a reproducing processing is carried out as follows. First, in the computer body 10, a high-order integrated code 55 (e.g., the high-order integrated code 55 having the index information 55a of "Push-Box X" shown in FIG. 7) corresponding to a desired operation procedure to be realized is retrieved from a plurality of high-order integrated codes 55 held by the high-order integrated code holding part 6, on the basis of the index information 55a and so forth. Furthermore, when there are a plurality of high-order integrated codes 55 corresponding to the desired operation procedure, a high-order integrated code, to which a desired evaluation information 55b is applied, is selected.

Then, the calculating directions in the analyzing part 1 and the integrated storage part 2 are switched to the reverse directions (inverse mapping and reproduction) under the control by the monitor and control part 3, and the integrated storage part 2 reproduces a plurality of internal representation codes 53 corresponding to the retrieved high-order integrated code 55.

Thereafter, the analyzing part 1 inversely maps at least the motor internal representation code 53 of the plurality of reproduced internal representation codes 53 in view of the temporal relationship. Finally, the motor input information obtained by the inverse mapping is outputted to the output unit 19 as a control signal to drive the finger of the robot.

At this time, the movement of the box pushed by the finger of the robot is taken again by the video camera to be a visual input information 51 to be a visual internal representation code 53 via the analyzing part 1. The visual internal representation code 53 thus analyzed is compared with the internal representation code 53 obtained by reproducing the high-order integrated code 55, and it is confirmed whether a correct operation is being carried out. Furthermore, if both are the same, it is regarded that the operation is normal, and if both are different, the reproduction is temporarily stopped until it is confirmed.

Operation Example 2

Referring to FIGS. 7 through 9, an operation for utilizing the relationship between the acquired internal representation codes (operation procedure) to make a plan to reach a goal on the basis of the plan will be described below. Furthermore, it is assumed that the relationships shown in FIGS. 7 and 8 have been stored in the computer body 10.

There is herein supposed a case where a goal "the box is moved to the right and far side" is given while the box is positioned on the left and near side in the projection range.

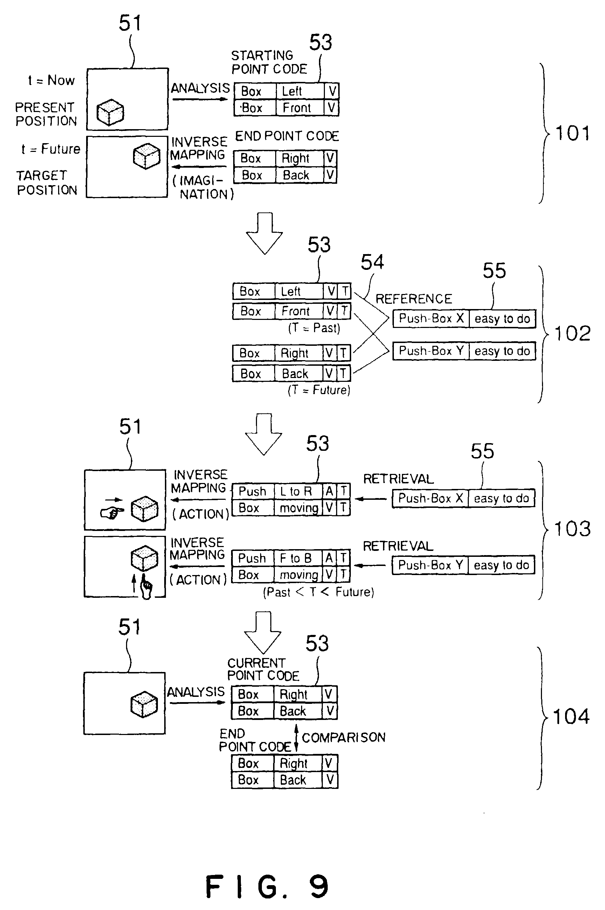

In this case, first, an internal representation code 53 (a starting point code) corresponding to the present position of the box, and an internal representation code 53 (an end point code) corresponding to a target position of the box are found (step 101). Specifically, a video signal captured by the video camera is used as a visual input information. The visual input information is analyzed by the analyzing part 1 to derive the starting point code. Also, the given goal ("the box is moved to the right and far side") is analyzed to derive the end point code. In this case, the information "right and far side" included in the goal is used as a key to derive the end point code shown in FIG. 9. Furthermore, since the end point code thus derived can be reproduced as a visual input information by the inverse mapping in the analyzing part 1, it can be confirmed by such reproduction whether the end point code is appropriate.

Then, while the starting point code and the end point code are held by the internal representation code holding part 5, the integrated storage part 2 reproduces high-order integrated codes 55 corresponding to the starting point code and end point code (step 102). In this case, two high-order integrated codes 55 of "Push-Box X" and "Push-Box Y" are reproduced.

Thereafter, a motor internal representation code having a time stamp between the time stamp (T = "Past") of the starting point code and the time stamp (T = "Future") of the end point code is retrieved from the internal representation codes 53 integrated under the high-order integrated codes 55. At this time, when there is no motor internal representation code directly connecting the starting point code to the end point code, a series of motor internal representation codes from the end point code to the starting point code via the intermediate point code are roundly retrieved.

Then, the motor internal representation code thus derived is inversely mapped by the analyzing part 1 in view of the temporal relationship, and the motor input information obtained by the inverse mapping is outputted to the output unit 19 as a control signal to drive the finger of the robot (step 103).

Finally, the picture of the box pushed by the finger of the robot is taken again by the video camera to be a visual input information 51 to be analyzed by the analyzing part 1 to derive a visual internal representation code 53 (a current point code) to be compared with the end point code. Then, if both are the same, it is regarded that the goal is normally accomplished to end the operation (step 104).

Operation Example 3

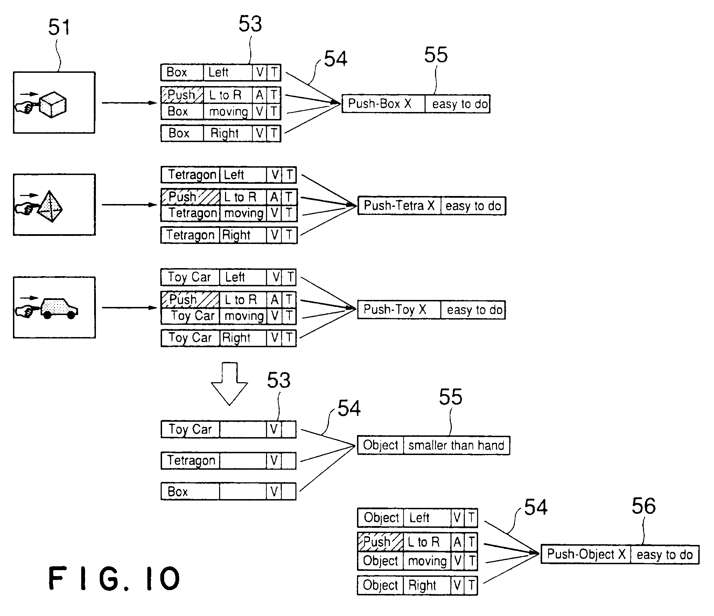

Referring to FIG. 10, an operation for rearranging the relationship between the internal representation codes, and the high-order integrated codes to integrate the high-order integrated codes to introduce a higher-order integrated code to reconstruct a hierarchical form will be described below.

As shown in the upper stage of FIG. 10, it is assumed that the computer body 10 stores therein the relationship when three kinds of objects of a box, a tetrahedron and a mini car are moved from the left to the right.

When all of operations carried out for these objects are the same, the relationship to the operation procedure corresponding to the operation of each object can be stored as shown in the upper stage of FIG. 10. In addition, as shown in the lower stage of FIG. 10, the concrete three kinds of objects of the box, the tetrahedron and the mini car can be integrated into one abstract object under the high-order integrated code, and the operation procedures for the abstract object can be integrated into a general form.

Specifically, the monitor and control part 3 compares a plurality of internal representation code groups held by the internal representation code holding part 5 every high-order integrated code held by the high-order integrated code holding part 6, to find a plurality of internal representation code groups having, e.g., a common motor internal representation code.

Then, on the basis of the plurality of internal representation code groups thus found, the following processing is carried out. That is, a plurality of internal representation codes 53 (including only the index information 53a and the signal source information 53c) for identifying the kind of each object are newly produced to be integrated into one under a high-order integrated code 55 of "Object". In addition, as high-order integrated codes for integrating the plurality of internal representation code groups into the common code, a plurality of high-order integrated codes having an index information 53a of "Object" are produced, and these codes are integrated into one under a higher-order integrated code of "Push-Object X."

As can be seen from the above described operation examples 1 through 3, according to this preferred embodiment, when the input information 51 is inputted from the outside, the internal representation code 53 corresponding to the input information 51 is produced by the analysis in the analyzing part 1, and then, the relationship between these internal representation codes 53, together with high-order integrated codes 55, is stored in the integrated storage part 2. Then, on the basis of the internal representation codes 53, the relationship between the internal representation codes 53, and the high-order integrated codes 55, which are thus stored, the internal representation code corresponding to a desired high-order integrated code is reproduced and inversely mapped by the integrated storage part 2 and the analyzing part 1, respectively, to be reproduced as an input information 51. Therefore, the relationship between the internal representation codes 53 can be automatically acquired on the basis of the input information from the outside, and it is possible to cope with various applied tasks without describing programs and so forth.

In addition, according to this preferred embodiment, by reproducing in two directions by the integrated storage part 2, it is possible to reproduce a complete combination of internal representation codes from an incomplete combination of internal representation codes via high-order integrated codes, and it is possible to find the relationship between two internal representation codes (an internal representation code corresponding the present position and an internal representation code corresponding a target position), so that it is possible to realize an advanced information processing, such as complement, analogy, prediction, planning, and attainment of a goal.

Moreover, according to this preferred embodiment, an integration processing (storage/reproduction) is controlled in accordance with a predetermined performance function under the control by the monitor and control part 3, so that it is possible to acquire a more preferable operation procedure.

Furthermore, while the method shown in FIGS. 2, 3 and 6 has been used as a method for realizing the analyzing part 1, the integrated storage part 2 and the monitor and control part 3 in the above described preferred embodiment, this method is only an example, and another optional realizing method may be adopted. Specifically, for example, the analyzing part 1 has only to be capable of carrying out a bi-directional conversion processing (analysis/inverse mapping) between the input information and the internal representation code. For example, the analyzing part 1 can be realized by translation tables. In addition, the integrated storage part 2 has only to be capable of carrying out a bi-directional integration processing (storage/reproduction) between the internal representation code and the high-order integrated code. For example, the integrated storage part 2 can be realized as a memory system utilizing a lookup table. Furthermore, specifically, the analyzing part 1 and the integrated storage part 2 can be installed by utilizing a neuronet of artificial neural circuit elements comprising electronic parts or the like. Alternatively, the analyzing part 1 and the integrated storage part 2 can be installed by a computer program utilizing a parallel computer or the like. Moreover, the monitor and control part 3 has only to be capable of carrying out the above described various controls on the basis of the above described operation and performance functions. For example, the monitor and control part 3 can be realized by a computer program utilizing a usual CPU.

As described above, according to the present invention, the relationship (an operation procedure or the like) between internal representation codes can be automatically acquired on the basis of the input information from the outside, and it is possible to realize an advanced information processing, such as complement, analogy, prediction, planning and attainment of a goal. Therefore, it is possible to cope with various applied tasks without describing programs and so forth.

In particular, it is possible to appropriately cope with a task (e.g., crisis management) which is difficult to be previously programmed.

In addition, according to the present invention, it is possible to easily construct an autonomously operable system. Even if it encounters a status which can not be previously predicted, it is possible to take measures to safely solve the status although it is not best. Therefore, it is possible to avoid the critical situation due to the improper use or runaway of a computer system in the information-oriented society, or it is possible to reduce the critical situation to the minimum.

Furthermore, the present invention can be utilized in various industries, such as robot, automatic control, machine translation, antipersonnel interface, various work supports, various design supports, rationalization of office work, and welfare support system, and can greatly contribute to the information-oriented society in the near future.

While the present invention has been disclosed in terms of the preferred embodiment in order to facilitate better understanding thereof, it should be appreciated that the invention can be embodied in various ways without departing from the principle of the invention. Therefore, the invention should be understood to include all possible embodiments and modification to the shown embodiments which can be embodied without departing from the principle of the invention as set forth in the appended claims.

**Claims**

1. A brain type computer system, comprising:

an input information holding part for holding an input information;
an internal representation code holding part for holding an internal representation code indicative of semantics of said input information;
a high-order integrated code holding part for holding a high-order integrated code indicative of the relationship between a plurality of internal representation codes;
an analyzing part for analyzing said input information held by said input information holding part to produce an internal representation code corresponding to said input information and for inversely mapping said internal representation code held by said internal representation code holding part to produce an input information corresponding to said internal representation code;
an integrated storage part for establishing the relationship between a plurality of internal representation codes held by said internal representation code holding part to store said relationship therein, said integrated storage part producing a high-order integrated code corresponding to said relationship between a plurality of internal representation codes held by said internal representation code holding part, and said integrated storage part reproducing said high-order integrated code held by said high-order integrated code holding part to produce one or a plurality of internal representation codes corresponding to said high-order integrated code; and

a monitor and control part for monitoring said input information, said internal representation code or said high-order integrated code, which are held by said input information holding part, said internal representation code holding part and said high-order integrated code holding part, respectively, to control said analyzing part and said integrated storage part.

2. A brain type computer system as set forth in claim 1, wherein said analyzing part produces a plurality of proposals for input information corresponding to said internal representation codes by inversely mapping said internal representation code held by said internal representation code holding part.

3. A brain type computer system as set forth in claim 1 or 2, wherein said analyzing part learns the relationship between an input information and an internal representation code step by step.

4. A brain type computer system as set forth in one of claims 1 to 3, wherein said analyzing part has a learning mode, in which the relationship between an input information and an internal representation code is learned step by step, and a non-learning mode, in which the relationship between the input information and the internal representation code is not learned, said learning and non-learning modes being switched in accordance with the kind of said input information.

5. A brain type computer system as set forth in one of claim 1 to 4, wherein said integrated storage part stores therein the relationship between a plurality of internal representation codes held by said internal representation code holding part, with a temporal relationship.

6. A brain type computer system as set forth in one of claim 1 to 5, wherein said integrated storage part stores therein the relationship between a plurality of internal representation codes held by said internal representation code holding part, together with the relationship between a plurality of high-order integrated codes held by said high-order integrated code holding part.

7. A brain type computer system as set forth in one of claims 1 to 6, wherein said integrated storage part reproduces an internal representation code corresponding to a high-order integrated code on the basis of said high-order integrated code held by said high-order integrated code holding part, and reproduces another internal representation code via a high-order integrated code corresponding to an internal representation code on the basis of said internal representation code held by said internal representation code holding part.

8. A brain type computer system as set forth in one of claims 1 to 7, wherein said monitor and control part controls the switching of the analysis/inverse mapping in said analyzing part, and the switching of the storage/reproduction in said integrated storage part.

9. A brain type computer system as set forth in one of claims 1 to 8, wherein said monitor and control part evaluates an internal representation code held by said internal representation code holding part, and controls a storing operation or a reproducing operation in said integrated storage part on the basis of the evaluated result.

10. A brain type computer system as set forth in one of claims 1 to 9, wherein said monitor and control part compares an internal representation code, which is obtained by the analysis in said analyzing part, with an internal representation code obtained by the reproduction in said integrated storage part, and controls operations of said analyzing part and said integrated storage part.

11. A brain type computer system as set forth in one of claims 1 to 10, wherein said monitor and control part controls a selection operation for a plurality of input informations obtained by the inverse mapping in said analyzing part.

12. A brain type computer system as set forth in one of claims 1, to 11, further comprising an observing input/output part for inputting/outputting an input information, an internal representation code or a high-order integrated code, which are held by said input information holding part, said internal representation code holding part and said high-order integrated code holding part, respectively, from/to an external apparatus.

13. A brain type computer system as set forth in one of claims 1 to 12, further comprising an input state input/output part for inputting/outputting data indicative of an internal stage in said analyzing part, said integrated storage part or said monitor and control part from/to an external apparatus.

**14.** A brain type computer system as set forth in one of claims 1, to 13, further comprising:

a pre-processing part for converting a signal, which is obtained from an input unit, to input the converted signal as an input information; a post-processing part for converting an input information, which is obtained by the inverse mapping in said analyzing part, to output a signal to an output unit; and an input/output control part for controlling said pre-processing part and said post-processing part under the control by said monitor and control part.

**15.** A storage system for integratedly managing sensory and motor input informations, comprising:

an internal representation code holding part for holding a plurality of internal representation codes indicative of semantics of an input information; an integrated storage part for storing the relationship between said internal representation codes held by said internal representation code holding part; and a high-order integrated code holding part for holding a high-order integrated code indicative of said relationship between said internal representation codes held by said integrated storage part.

**16.** A storage system as set forth in claim 15, wherein each of said internal representation codes held by said internal representation code holding part has a time information indicative of a temporal relationship to other internal representation codes.

**17.** A storage system as set forth in claim 15 or 16, wherein said high-order integrated code held by said high-order integrated code holding part has an evaluation information indicative of an evaluated result for said internal representation codes integrated under said high-order integrated code.

**FIG.1**

EXTERNAL APPARATUS — 12

EXTERNAL APPARATUS — 14

INTERNAL STATE INPUT/OUTPUT PART — 13

OBSERVING INPUT/OUTPUT PART — 11

HIGH-ORDER INTEGRATED CODE HOLDING PART — 6

INTEGRATED STORAGE PART — 2

INTERNAL REPRESENTATION CODE HOLDING PART — 5

ANALYZING PART — 1

INPUT INFORMATION HOLDING PART — 4

MONITOR AND CONTROL PART — 3

— 10

PRE-PROCESSING PART — 15

POST-PROCESSING PART — 16

INPUT/OUTPUT CONTROL PART — 17

— 20

INPUT UNIT — 18

OUTPUT UNIT — 19

FIG. 2

ANALYSIS

INVERSE MAPPING

F I G. 3

F I G. 4

(a)

ABC

(b)

ABC

(c)

ABC

(d)

(e)

Char. A  Char. B  Char. C

Square. 1 Square. 2

(f)

| Char. A | X1, Y1, C1 |
|---------|------------|
| Char. B | X2, Y2, C2 |
| Char. C | X3, Y3, C3 |
| Square. 1 | X4, Y4, C4 |
| Square. 2 | X5, Y5, C5 |
| ⋮ | ⋮ |

# F I G. 5

F I G. 6

EP 1 035 506 A2

t = Now-2    ANALY-SIS    V  [ o ]    51 → 52

Box | Left | V | T    53

53a  53b  53c  53d

t = Now-1    V  [ o ]    A  [ o ]

Push | L to R | A | T
Box | moving | V | T

INTEGRATION    54

Push-Box X | easy to do    55

55a    55b

t = Now    V  [ o ]    A  [ ]

Box | Right | V | T

# F I G. 7

| | | | | |
|---|---|---|---|---|
| Box | Front | V | T | |
| 53a | 53b | 53c | 53d | |

| | | | |
|---|---|---|---|
| Push | F to B | A | T |
| Box | moving | V | T |

| | | | |
|---|---|---|---|
| Box | Back | V | T |

| | |
|---|---|
| Push-Box Y | easy to do |
| 55a | 55b |

ANALY-SIS

INTEGRATION

t = Now-2
t = Now-1
t = Now

51   52   53   54   55

F I G. 8

24

FIG. 9

51    53    54    55

| Box | Left | V | T |
| Push | L to R | A | T |
| Box | moving | V | T |
| Box | Right | V | T |

| Push-Box X | easy to do |

| Tetragon | Left | V | T |
| Push | L to R | A | T |
| Tetragon | moving | V | T |
| Tetragon | Right | V | T |

| Push-Tetra X | easy to do |

| Toy Car | Left | V | T |
| Push | L to R | A | T |
| Toy Car | moving | V | T |
| Toy Car | Right | V | T |

| Push-Toy X | easy to do |

53    54    55

| Toy Car | | V | |
| Tetragon | | V | |
| Box | | V | |

| Object | smaller than hand |

54    56

| Object | Left | V | T |
| Push | L to R | A | T |
| Object | moving | V | T |
| Object | Right | V | T |

| Push-Object X | easy to do |

FIG. 10